# EUROPEAN PATENT SPECIFICATION

(11) **EP 1 665 587 B1**
(45) Date of publication and mention of the grant of the patent: **06.12.2006**
(21) Application number: 04766433.9
(22) Date of filing: 05.08.2004
(51) Int. Cl.: H04B 7/26, H04Q 7/22, H04L 12/28

(54) **METHOD AND APPARATUS FOR PROVIDING A MULTIMEDIA SERVICE**
VERFAHREN UND VORRICHTUNG ZUR BEREITSTELLUNG EINES MULTIMEDIA-DIENSTES
PROCEDE ET APPAREIL PERMETTANT D'OFFRIR UN SERVICE MULTIMEDIA

(30) Priority: 12.09.2003 GB 0321423
(43) Date of publication of application: 07.06.2006
(73) Proprietor: TELEFONAKTIEBOLAGET LM ERICSSON (publ), 164 83 Stockholm (SE)
(72) Inventor: PEISA, Janne, FIN-00180 Espoo (FI); SAGFORS, Mats, FIN-02400 Kyrkslätt (FI); TORSNER, Johan, FIN-02600 Esbo (FI); WAGER, Stefan, FIN-02770 Esbo (FI)
(74) Representative: Lind, Robert
(86) International application number: PCT/EP2004/051728
(87) International publication number: WO 2005/027375

(56) References cited:
- EP-A- 1 107 481
- EP-A- 1 126 651
- US-A1- 2003 152 105
- BIANCHI G ET AL: "Packet data service over GSM networks with dynamic stealing of voice channels" GLOBAL TELECOMMUNICATIONS CONFERENCE, 1995. CONFERENCE RECORD. COMMUNICATION THEORY MINI-CONFERENCE, GLOBECOM '95., IEEE SINGAPORE 13-17 NOV. 1995, NEW YORK, NY, USA,IEEE, US, 13 November 1995 (1995-11-13), pages 1152-1156, XP010164405 ISBN: 0-7803-2509-5
- CHANG WOOK AHN ET AL: "Soft reservation multiple access with priority assignment [SRMA/PA]: a novel MAC protocol for QoS-guaranteed integrated services in mobile ad-hoc networks" -, vol. 2, 24 September 2000 (2000-09-24), pages 942-947, XP010525508
- MARCO A CLEMENTE, FERNANDO J. VELEZ: "Parameters for Tele-traffic Characterization in Enhanced UMTS" COST 273, [Online] 17 January 2003 (2003-01-17), XP002311288 BARCELONA, SPAIN Retrieved from the Internet: URL:http://seacorn.ptinovacao.pt/docs/pape rs/TD-03-022.pdf>

## Description

### Field of invention

The present invention relates to a method and apparatus for providing a Multimedia service and in particular a service which combines real-time and non-real time information.

### Field of the Invention

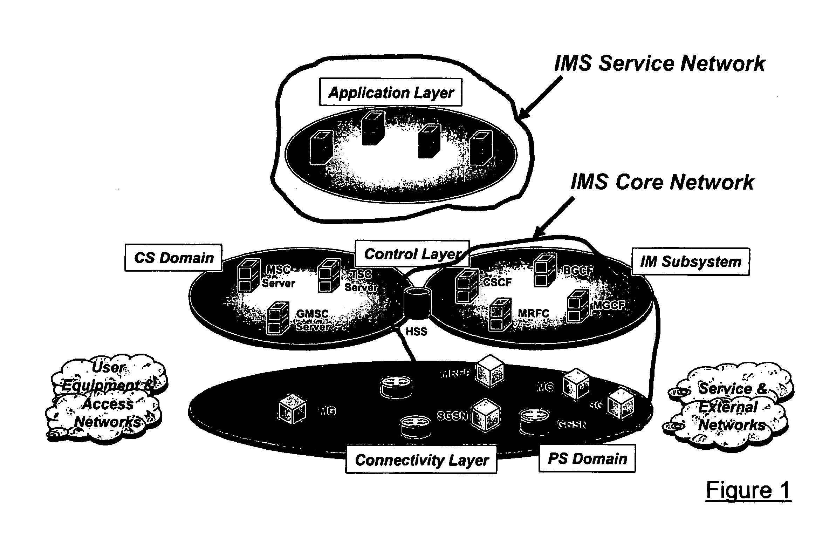

IP Multimedia Subsystem (IMS) is the technology defined (in TS 32.225, Release 5) by the Third Generation Partnership Project (3GPP) to provide IP Multimedia services over 3G (UMTS) mobile communication networks. IMS provides key features to enrich the end-user person-to-person communication experience through the integration and interaction of services. IMS allows new rich person-to-person (client-to-client) as well as person-to-content (client-to-server) communications over an IP-based network. The IMS makes use of the Session Initiation Protocol (SIP) and Service Delivery Protocol (SDP) to set up and control calls or sessions between user terminals (or user terminals and web servers). IMS sits on top of an access network which would typically be a General Packet Radio Service (GPRS) network but which might use some alternative technology, e.g. WiFi. Figure 1 illustrates schematically how the IMS fits into the mobile network architecture in the case of a GPRS access network.

An example of a combinational IP Multimedia service is a multimedia service that indudes and combines both a Circuit Switched media (such as voice) and a Packet Switched media over the IP Multimedia domain (such as pictures, video, presence, instant messages, etc.). A service referred to here as "WeShare" combines the full IP Multimedia Subsystem (IMS) benefits of a multimedia service with CS voice. The service enables a user, during a Circuit Switched (CS) voice conversation with another user, to take a picture, a video or audio clip, etc. and to share this content with other users in (near) real time. Either party in the conversation may initiate transmission of content to the other party.

In WCDMA systems such as UMTS, it can be anticipated that a major bottleneck for such services will be the long signalling delays related to the (re-)configuration of the Packet Switched Radio Access Bearers (PS-RAB) required before the actual transfer (of the multimedia data) can take place, and to the SIP signalling between the peer user terminals. According to the existing proposals for combinational services, it is assumed that the CS call is established first (a state referred to as SP0-State). Before the packet data transmission can commence, a radio bearer for the PS part has to be (re-)configured in parallel with the CS call (the so-called SP64-State). These setup (and re-configuration) procedures may take considerable time, since the signalling bearer in parallel with the CS speech-bearer has a capacity of only 3.4 kbps (34.108). In addition, there are risks that the reconfiguration may fail. If the channel switch fails, also the speech connection may be lost. Also, if there is a shortage of resources in the network, it could happen that the request for the PS bearer is denied. This is because the resources needed for the SP64-state can be quite demanding. According to the current proposals, it may therefore happen that no PS data at all can be supported. This risk is especially high in the case of mobile-to-mobile communications (as compared for example to mobile to fixed line terminal), where the SP64 state has to be accepted for two (independent) users in order for the use-case to work. If resources are denied, no PS services whatsoever will be available for the users.

MOULY M., PAUTET M.-B., "The GSM System for Mobile Communications" (ISBN 2-9507190-0-7) discloses in "Chapter 4: The Radio Interface" transmission of real-time data and non-real-time or signalling data on the same physical channel.

### Summary of the Invention

According to a first aspect of the present invention there is provided a method of providing a combinational communication service to a user of a communication network where a physical channel is defined for the user in respect of a network where a physical channel is defined for the user in respect of a connection primarily for carrying real time data, the method comprising:
dynamically multiplexing non-real time or signalling data onto said physical channel in order to allow non-real time data to be transmitted on the physical channel or to allow signalling, for setting up a packet switched bearer for carrying non-real time data, to be transmitted on the physical channel;
wherein said non-real time or signalling data is transported in frames of the physical channel during periods when the real time data conveys no informational content.

According to a second aspect of the present invention there is provided a method of providing a combinational communication service to a user of a communication network where a physical channel is defined for the user in respect of a connection primarily for carrying real time data, the method comprising:
dynamically interrupting said physical channel in order to allow a second physical channel to be established for transmitting non-real time data.

### Brief description of the drawings

Figure 1 illustrates schematically a 3G network architecture incorporating an IMS core network;
Figure 2 shows an architecture using an embodiment of the present invention;
Figure 3 shows a further architecture embodying the invention; and
Figure 4 shows a third architecture embodying the invention.

### Detailed Description of Certain Embodiments

The following discussion assumes that a mobile user (or user equipment UE) is engaged in a conversation with another user using circuit-switched (CS) speech. In the "Push-to-Talk" scenario, one of the users then decides to transmit a picture (alternatively: any data) to the other peer. The Users are thus in a so-called "SPO-state", i.e. they have an active speech connection and both have (at least) one packet data protocol (PDP) context each towards the packet switched (PS) network. However, no packet switched (PS) transport blocks can be sent without re-configuring the radio layers (layer1/layer2) of the radio access network.

A first solution to the problem of how to quickly and reliably exchange PS data is to "steal" capacity from the Speech connection by identifying periods of silence in the CS data, and to utilize the spare capacity not used by the speech connection to meet the demands of the PS (packet-switched) connection.

The deployed speech bearer in a Universal Mobile Telecommunication System (the one used in SP0/SP64) supports an Adaptive Multi-Rate (AMR) coding scheme with 12.2 kilo bits per second (kbps). However, a significant amount of the bit-rate allocated for the user is not used at times of speech inactivity. Typically, some 50 % of the speech frames are Silence Descriptor (SID) frames (only one party is talking). In a talk burst, in each 20 ms Traffic Type Indicator (TTI) frame, 244 bits in transport blocks of 81, 103 and 60 bits, respectively, are transmitted. However, during speech inactivity, only one (SID) block of 31 bits is sent every n:th TTI. A typical value for n is 24 (as used in GSM). Thus, speech inactivity periods provide a great deal of capacity to be utilized for the provisioning of the PS services. A crude calculation (without considering different levels of error protection and coding methods) gives the following result:
SID frames consume only 65 bits/s. Spare capacity during SID = 12140 bps. Activity -50 %. An additional -6 kbps is available for the parallel PS data by identifying SIDs and utilizing the spare resources. Moreover, the signalling radio bearers (SRBs), which are currently restricted to 3.4 kbps, can take advantage of these spare resources allowing, for example, the transmission of initial SIP signalling.

Though the current protocol standard should facilitate the implementation of this procedure, it may be useful to have a reference bearer in the test specification (according to the TS 34.108 of the 3GPP consortium) in order to secure inter-operability. In particular, it may be appropriate to define new Transport Format Combinations which include the SID frame together with a PS and DCCH (Dedicated Control Channel) data.

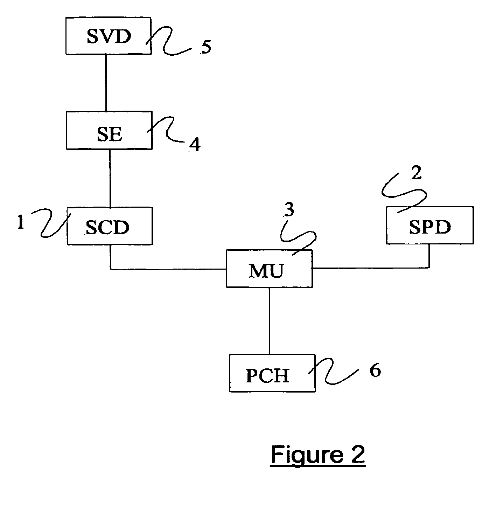

Figure 2 depicts functional elements implemented at a mobile user terminal. These include a source of circuit-switched (CS) data SCD 1 and a source of packet switched data SPD 2, both connected to a multiplexing unit MU 3 for providing data to the multiplexing unit MU 3. Figure 2 further depicts an optional media coder SE 4 providing media data to the source of circuit switched data SCD 1 and receiving input from an optional source of media data SVD 5. The source of media data 5 can be a source of voice or video data and the media coder 4 can be a speech coder or a video coder.

The output of the multiplexing unit MU 3 is connected to a physical channel PCH 6. The physical channel 6 can be a channel according to Layer 1 and the multiplexing unit can comprise a Layer1/Layer2 (L1/L2) interface according to the TS25.302 of the 3GPP. Data transmitted via the physical channel 6 can be segmented into frames or so-called transport blocks, wherein the transport blocks comprising the circuit switched and the packet switched data are transmitted over the physical channel 6 which is commonly used for the transmission of the circuit switched and the packet switched data.

The source of CS data 1 typically sends "bursty" data, resulting in periods of sending data and periods of silence. An example of such bursty data is voice data. Voice data can be encoded such that, in the speech coder 4 receiving the raw voice data and outputting encoded voice data, periods of silence are detected in the raw voice data and encoded in the encoded voice data as so called "silence" frames. The silence frames comprise a description of the period of silence, such as a duration of the period of silence and a noise descriptor.

Circuit switched data comprising voice data encrypted with a voice encoder as described, comprises frames describing active speech, so called speech bursts, frames describing periods of silence, silence descriptor frames, and periods in which no data is sent. Similarly, where the source of media data provides video rather than voice, the data rate of the video data may vary. For example, video data of a video data stream comprising a still image may comprise the still image together with a description of the duration for which the still image is presented.

The multiplexing unit 3 multiplexes the frames of circuit switched data as well as the frames of packet switched data, and transmits the frames of circuit switched and packet switched data over the same physical channel 6. The scheduling can comprise prioritisation and buffering of the packet switched or circuit switched frames, e.g. if the circuit switched frames comprise real time data such as speech data, the circuit switched frames can be prioritised over the packet switched frames. The periods of silence in the circuit switched data, e.g. the periods of silence in speech data encoded as described above, can be used advantageously for the transmission of the packet switched data.

The physical channel can comprise a radio transmission link such as a transmission link using code division multiplexing in a CDMA (Code Division Multiple Access) Network. In code division multiplexing, spreading codes are used to modulate the data to be transmitted, and the allocation of a physical channel comprises an allocation of code space, i.e. a certain spreading code, for this physical channel. In this embodiment a common physical channel for the transmission of the circuit switched and the packet switched data is equivalent to the allocation of a common code space for the transmission of both circuit switched and packet switched data. This is advantageous if the circuit switched data is voice data and the packet switched data is multimedia data, as in a push-to-watch session in which circuit switched voice data and multimedia data such as image data is shared between users in a multimedia session. In this embodiment, the periods of silence, i.e. periods in which no frames are output by the media coder 4, can be advantageously used for the transmission of packet switched multimedia data. Packet switched multimedia data can alternatively or additionally comprise signalling data such as data for session signalling for the multimedia session and/or payload for the multimedia session. This procedure can therefore be used to avoid the setting up of a further physical channel (or perhaps to supplement a further physical channel). If the physical channel comprises a radio transmission link, this saves radio resources, e.g. coded space in the example of the CDMA radio transmission link.

Alternatively the physical channel which is intended for the transmission of the circuit switched data can carry the signalling traffic for the setting up of a further physical channel. This provides a reliable transmission link for the transmission of signalling traffic. The further physical channel could be used for example solely for the transmission of packet switched multimedia data.

It will be appreciated that a receiver will be informed of the transport channel(s) which will carry data and of how the data should be processed, using for example Transport Format Combination Identifiers (TFCI) carried on the radio interface

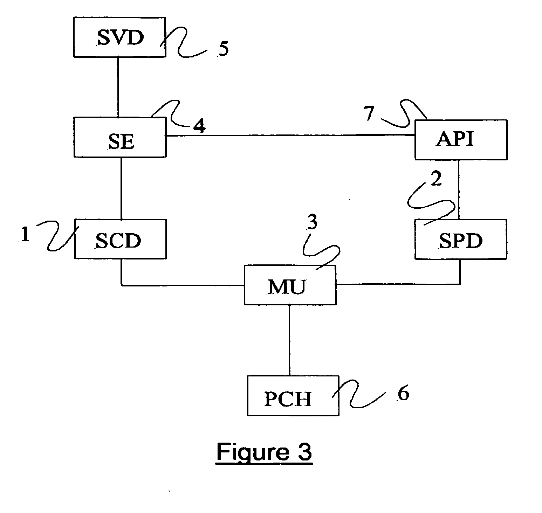

Figure 3 depicts an advantageous embodiment of the invention implemented at a mobile user terminal, where elements common to the embodiment of Figure 2 are indicated with like reference numerals. In addition the embodiment depicted in Figure 3 comprises an application protocol instance (API) 7. The application protocol instance 7 is connected to the source of packet switched data 2 and provides packet switched data to that source 2. The application protocol instance 7 is connected to the media coder 4, for the purpose of controlling the media coder. The application protocol instance 7 can be for example a multimedia application protocol instance that takes part in a multimedia session, e.g. a push-to-watch session

In the embodiment of Figure 3, the media coder 4 provides encoding of media data according to a plurality of different rates. For example, a speech coder can provide encoded speech at a maximum rate, a minimum rate or an average rate. For providing the different rates the coder can provide a plurality of encoding algorithms or a set of parameters for an algorithm. Alternatively the rate can be controlled by a combination of a selection of encoding algorithms and parameters for one or more algorithms. An example for a speech coder is the AMR (Adaptive Multi Rate) codec which provides coding rates of 12.2, 7.95, 5.9, and 4.75 kbps. An example for a video coder is the MPEG (Motion Picture Experts Group) codec.

Consider for example the case where the application protocol instance 7 determines that there is a need to transmit packet switched data, after a circuit switched call has been established. The application protocol instance 7 signals to the media coder 4 that the encoding rate for the CS data should be reduced, i.e. that an output data rate of the media coder 4 should be reduced. The media coder 4 recognises the indication to reduce the output data rate, chooses a lower encoding rate, and starts encoding multimedia data at a reduced output rate. In this way, transmission capacity is released for the physical channel independent of the behaviour of the source of multimedia data. In the case of voice data, the transmission capacity is released independently of the occurrence of periods of silence in the voice data. The spare transmission capacity on the Physical channel 6 can be utilized by the packet switched data source 2 to enable the transmission of the packet switched data from the application protocol instance 7, independently of the behaviour of the source of media data 5.

In an advantageous embodiment, the source of media data is outputting voice data, the media coder is a speech coder, e.g. an AMR codec, and the application protocol instance provides multimedia image data. In this so-called push-to-watch scenario, reliable transmission of image data is provided independently of the occurrence of silence intervals in the speech data from the source of media data SVD.

Optionally, a reconfiguration of the PS bearer may then take place using signalling sent over the same physical channel, so that more resources are allocated for the user. This will speed up the PS transfer. Re-allocation of additional resources can be made in parallel with e.g. the SIP signalling. When more resources are allocated to the user, the codec may then be up-switched to the original rate.

The codec rate decrease/increase may be initiated by either the mobile user terminal (UE) or the network. Where the network initiates this, the codec rate increase/decrease information is exchanged between the UE and the Radio Network Controller (RNC) of the radio access network by changing the Transport Format Combination Set (TFCS) with the Transport format combination limitation procedure of the radio resource control (RRC) protocol. The RNC receives information about changed codec rate from the core network over the lu interface. This is exchanged in the user plane frame handling protocol.

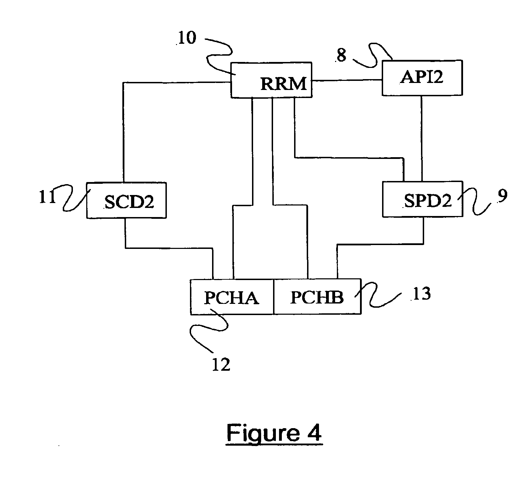

Figure 4 depicts an architecture for a third embodiment of the invention implemented at a mobile user terminal and in which the transmission of circuit switched data is temporarily interrupted to allow the transmission of packet switched data. The architecture depicted in Figure 4 comprises an application protocol instance API2 8 is connected to a second source of packet switched data SPD2 9 for providing packet switched data. Furthermore the application protocol instance 8 is connected to a radio resource manager RRM 10 for sending control signals. The radio resource manager 10 is connected to the second source of packet switched data 9 and a source of circuit switched data 11, and to first and second temporary physical channel PCHA 12 and PCHB 13 for transmission of control signals. The source of circuit switched data 11 is connectable to the first temporary physical channel 12, whilst the source of packet switched data 9 is connectable to the second temporary physical channel 13.

Initially, the first temporary physical channel 12 is established and circuit switched data is provided to the first temporary physical channel 12 by the source of circuit switched data 11. If the application protocol instance 8 subsequently detects a demand to transmit packet switched data, is signals a request to provide a physical channel to the radio resource manager 10. In response, the radio resource manager 10 frees resources currently provided for the transmission of the circuit switched data and provides said resources for the transmission of the packet switched data. In particular the radio resource manager 10 sends a request for release of a circuit switched bearer to the source of circuit switched data 11 and a request to the first temporary physical channel 12 that it should be released. The circuit switched bearer and the first temporary physical channel are released accordingly.

The radio resource manager 10 initiates the establishment of a packet switched bearer and the second temporary physical channel 13. The application protocol instance 8 sends packet switched data to the source of packet switched data 9 which is forwarded to and transmitted by the second temporary physical channel 13. After the transmission of packet switched data by the application protocol instance 8 it detects an end of said packet switched data. The application protocol instance 8 then signals to the radio resource manager 10 that resources that have been used for the transmission of the packet switched data can be freed. The radio resource manager 10 frees these resources and provides the resources for a re-establishment of the transmission of circuit switched data. In particular the radio resource manager 10 sends a request for release of a packets switched bearer to the source of packet switched data 9 and a request to the second temporary physical channel 13 that it should be released. The packet switched bearer and the second temporary physical channel 13 are released accordingly. The radio resource manager 10 initiates the reestablishment of a circuit switched bearer and a third temporary physical channel. The third temporary physical channel is established, a circuit switched bearer re-established, and circuit switched data is sent form the second source of circuit switched data 11 via the third temporary physical channel.

Optionally, a network-based server could support the functionality of release and re-establishment of a speech call before and after the transmission of the PS data. This server could also support an indication to the other party (presuming that his terminal supports both PS and CS) that the CS transfer is being suspended during the PS transfer. The necessary (SIP) signalling should be specified for the Push-to-Watch services.

The third embodiment described here provides the advantage that the Push-to-Watch service can be provided for terminals that do not support simultaneous voice and data calls, e.g. General Packet Radio Service (GPRS) phones.

## Claims

1. A method of providing a combinational communication service to a user of a communication network where a physical channel (6) is defined for the user in respect of a connection primarily for carrying real time data, the method comprising:
dynamically multiplexing (3) non-real time or signalling data onto said physical channel (6) in order to allow non-real time data to be transmitted on the physical channel (6) or to allow signalling, for setting up a packet switched bearer for carrying non-real time data, to be transmitted on the physical channel (6); **characterised in that**:
said non-real time or signalling data is transported in frames of the physical channel (6) during periods when the real time data conveys no informational content.

2. A method according to claim 1, wherein said connection primarily for carrying real time data is a circuit switched connection.

3. A method according to claim 1 or 2, wherein said frames of said physical channel conveying no informational content comprise silence descriptor frames

4. A method according to any one of the preceding claims and comprising detecting the need for the transmission of non-real time or signalling data and giving the non-real time or signalling data priority over real time data.

5. A method according to any one of the preceding claims, wherein the physical channel comprises a radio link and a code, common to the real time and non-real time data, for multiplexing of the radio channel is reserved for the physical channel.

6. A method according to any one of the preceding claims, wherein said real time data is speech data.

7. A method according to any one of the preceding claims, wherein said non-real time data is image or video clip data.

8. A method according to any one of the preceding claims, wherein said combinational service is a push-to-watch service.

9. A method according to any one of the preceding claims, wherein said real time data is coded prior to transmission, the method comprising detecting a demand for the sending of non-real time or signalling data and reducing the coding data rate accordingly, and using spare capacity on the physical channel to transport said non-real time or signalling data.

10. A method according to any one of the preceding claims, wherein said signalling data initiates the setting up of a further physical channel for transporting packet switched data.

11. A method of providing a combinational communication service to a user of a communication network where a physical channel (12) is defined for the user in respect of a connection primarily for carrying real time data, the method **characterised in**:
dynamically interrupting said physical channel (12) to free resources for a second physical channel (13) to be established for transmitting non-real time data.

12. A method according to claim 11, wherein, following the transmission of non-real time data on said second physical channel, said first physical channel is re-established or a further physical channel established for transporting the real time data.

## Patentansprüche

1. Verfahren zur Bereitstellung eines kombinatorischen Kommunikationsdienstes für einen Benutzer eines Kommunikationsnetzes, in dem ein physikalischer Kanal (6) definiert ist für den Benutzer in Bezug auf eine Verbindung primär zum Führen von Echtzeitdaten, das Verfahren umfassend:
dynamisches Multiplexing (3) von Nichtechtzeit- oder Signalisierungsdaten in dem physikalischen Kanal (6), um zu gestatten, dass Nichtechtzeitdaten in dem physikalischen Kanal (6) übertragen werden, oder um Signalisierung zu gestatten, zum Einrichten eines paketvermittelten Trägers zum Führen von Nichtechtzeitdaten, die in dem physikalischen Kanal (6) zu übertragen sind, **dadurch gekennzeichnet, dass**
die Nichtechtzeit- oder Signalisierungsdaten in Rahmen des physikalischen Kanals (6) während Perioden, in denen Echtzeitdaten keinen informativen Inhalt befördern, transportiert werden.

2. Verfahren nach Anspruch 1, wobei die Verbindung primär zum Führen von Echtzeitdaten eine leitungsvermittelte Verbindung ist.

3. Verfahren nach Anspruch 1 oder 2, wobei die Rahmen des physikalischen Kanals, die keinen informativen Inhalt befördern, Ruhedeskriptorrahmen umfassen.

4. Verfahren nach einem der vorstehenden Ansprüche und umfassend die Erfassung des Erfordernisses für die Übertragung von Nichtechtzeit- oder Signalisierungsdaten und Verleihung von Priorität der Nichtechtzeit- oder Signalisierungsdaten über Echtzeitdaten.

5. Verfahren nach einem der vorstehenden Ansprüche, wobei der physikalische Kanal eine Funkverbindung und einen Code umfasst, die gemeinsam für die Echtzeit- und Nichtechtzeitdaten sind, für Multiplexing des Funkkanals, der für den physikalischen Kanal reserviert ist.

6. Verfahren nach einem der vorstehenden Ansprüche, wobei die Echtzeitdaten Sprachdaten sind.

7. Verfahren nach einem der vorstehenden Ansprüche, wobei die Nichtechtzeitdaten Bild- oder Videoclipdaten sind.

8. Verfahren nach einem der vorstehenden Ansprüche, wobei der kombinatorische Dienst ein Push-to-watch-Dienst ist.

9. Verfahren nach einem der vorstehenden Ansprüche, wobei die Echtzeitdaten vor der Übertragung codiert werden, das Verfahren umfassend die Erfassung eines Bedarfs zum Senden von Nichtechtzeit- oder Signalisierungsdaten und Reduzierung der Datencodierungsrate dementsprechend und Verwendung von überschüssiger Kapazität in dem physikalischen Kanal zum Transportieren der Nichtechtzeit- oder Signalisierungsdaten.

10. Verfahren nach einem der vorstehenden Ansprüche, wobei die Signalisierungsdaten die Einrichtung eines weiteren physikalischen Kanals zum Transportieren von paketvermittelten Daten initiieren.

11. Verfahren zur Bereitstellung eines kombinatorischen Kommunikationsdienstes für einen Benutzer eines Kommunikationsnetzes, in dem ein physikalischer Kanal (12) definiert ist für den Benutzer in Bezug auf eine Verbindung primär zum Führen von Echtzeitdaten, das Verfahren **gekennzeichnet durch**:
dynamische Unterbrechung des physikalischen Kanals (12) zur Freigabe von Ressourcen für einen zweiten physikalischen Kanal (13), der zur Übertragung von Nichtechtzeitdaten einzurichten ist.

12. Verfahren nach Anspruch 11, wobei, folgend auf die Übertragung der Nichtechtzeitdaten in dem zweiten physikalischen Kanal, der erste physikalische Kanal wiederhergestellt oder ein weiterer physikalischer Kanal eingerichtet wird zum Transportieren der Echtzeitdaten.

## Revendications

1. Procédé de fourniture d'un service de communication combinatoire à un utilisateur de réseau de communication dans lequel un canal physique (6) est défini pour l'utilisateur en relation avec une connexion essentiellement pour transporter des données temps réel, le procédé comprenant:
le multiplexage dynamique (3) de données non en temps réel ou de signalisation sur ledit canal physique (6) afin de permettre que des données non en temps réel soient transmises sur le canal physique (6) ou afin de permettre une signalisation, pour instaurer un porteur de données commuté par paquets pour transporter des données non en temps réel, destinées à être transmises sur le canal physique (6) **caractérisé en ce que**
lesdites données non en temps réel ou de signalisation sont transportées selon des trames du canal physique (6) pendant des périodes pendant lesquelles les données en temps réel ne convoient pas de contenu informationnel.

2. Procédé selon la revendication 1, dans lequel ladite connexion essentiellement pour transporter des données en temps réel est une connexion commutée par circuit.

3. Procédé selon la revendication 1 ou 2, dans lequel lesdites trames dudit canal physique ne convoyant pas de contenu informationnel comprennent des trames de descripteur de silence.

4. Procédé selon l'une quelconque des revendications précédentes et comprenant la détection du besoin de transmission de données non en temps réel ou de signalisation et le fait d'octroyer aux données non en temps réel ou de signalisation la priorité sur les données en temps réel.

5. Procédé selon l'une quelconque des revendications précédentes, dans lequel le canal physique comprend une liaison radio et un code, en commun pour les données en temps réel et les données non en temps réel, pour le multiplexage du canal radio qui est réservé pour le canal physique.

6. Procédé selon l'une quelconque des revendications précédentes, dans lequel lesdites données en temps réel sont des données de parole.

7. Procédé selon l'une quelconque des revendications précédentes, dans lequel lesdites données non en temps réel sont des données d'images ou d'extraits vidéo.

8. Procédé selon l'une quelconque des revendications précédentes, dans lequel ledit service combinatoire est un service de vidéo à la demande.

9. Procédé selon l'une quelconque des revendications précédentes, dans lequel lesdites données en temps réel sont codées avant transmission, le procédé comprenant la détection d'une demande pour l'envoi de données non en temps réel ou de signalisation et la réduction du débit de données de codage en conséquence, et l'utilisation d'une capacité de secours sur le canal physique pour transporter lesdites données non en temps réel ou de signalisation.

10. Procédé selon l'une quelconque des revendications précédentes, dans lequel lesdites données de signalisation initient l'instauration d'un canal physique supplémentaire pour transporter des données commutées par paquets.

11. Procédé de fourniture d'un service de communication combinatoire à un utilisateur de réseau de communication, dans lequel un canal physique (12) est défini pour l'utilisateur en relation avec une connexion essentiellement pour transporter des données en temps réel, le procédé étant **caractérisé par**:
l'interruption de façon dynamique dudit canal physique (12) pour libérer des ressources pour un second canal physique (13) destiné à être établi pour transmettre des données non en temps réel.

12. Procédé selon la revendication 11, dans lequel, suite à la transmission des données non en temps réel sur ledit second canal physique, ledit premier canal physique est réétabli ou un canal physique supplémentaire est établi pour transporter les données en temps réel.
